# EUROPEAN PATENT APPLICATION

(11) **EP 1 372 066 A1**
(43) Date of publication of application: **17.12.2003**
(21) Application number: 02405484.3
(22) Date of filing: 12.06.2002
(51) Int. Cl.: G06F 9/44

(54) **Reusable HTML code fragments**

(71) Applicant: Commerce One Operations, Inc., Pleasanton, CA 94588-3050 (US)
(72) Inventor: Paymer, Richard, Orinda, CA 94563 (US)
(74) Representative: Falk, Urs, Dr.

(57) **Abstract**

The present invention involves using inner classes to create modular and reusable Hypertext Markup Language (HTML) fragments. A method is generated for a given HTML fragment which generates the fragment. This method is then added to an inner class. The inner class is placed in a file. The class may then be instantiated. Code is then added to JavaServer Page pages to generate the HTML fragment in the appropriate place. This allows for modular and reusable HTML code fragments to be edited by users unfamiliar with detailed programming languages such as Java. It also permits flexibility for a programmer to include the reusable fragment in the same file as the rest of the JSP code or in a separate file, as well as allowing the method that generates the fragment to accept parameters, enabling the HTML fragment to be tailored to particular applications.

## Description

### FIELD OF THE INVENTION

The present invention relates to web page programming. More specifically, the present invention relates to a technique for producing and using reusable HTML code fragments.

### BACKGROUND OF THE INVENTION

JavaServer Pages™ (JSP), a technology developed by Sun Microsystems, Inc. of Palo Alto, CA, allows web developers and designers to quickly and easily maintain information-rich, dynamic web pages. It is a presentation layer technology that makes working with HyperText Markup Language (HTML) easier. JavaServer Pages™ is a component-centric platform as opposed to a page-centric platform. Page-centric platforms concentrate on having all business, data, and presentation logic into scripted web pages. The main drawback of page-centric platforms is that they make it difficult to create large, scalable web applications. The logic written for scripted pages is locked inside the pages and reusable only through cut-and-paste. Furthermore, presentation logic is regularly mixed with business and data logic, making application maintenance difficult by forcing programmers to modify the look and feel of an application without breaking the tightly coupled business logic.

JavaServer Pages™, on the other hand, focuses on components. JavaBeans™ or similar components contain the business and data logic for an application, and tags and a scripting platform are provided for exposing the content generated.

A developer creating a JSP page typically combines Java code fragments and HTML or other code fragments, using JSP syntax to indicate the language in which the fragment is written. One problem that is encountered, however, is in writing HTML code fragments that are both modular, meaning that the code is assembled in blocks that perform specific logical functions, and reusable, meaning that they may be used in several places without duplicating the code.

One solution to this problem would be to define a Java method inside a JavaServer Pages page. An example of this is the following code:

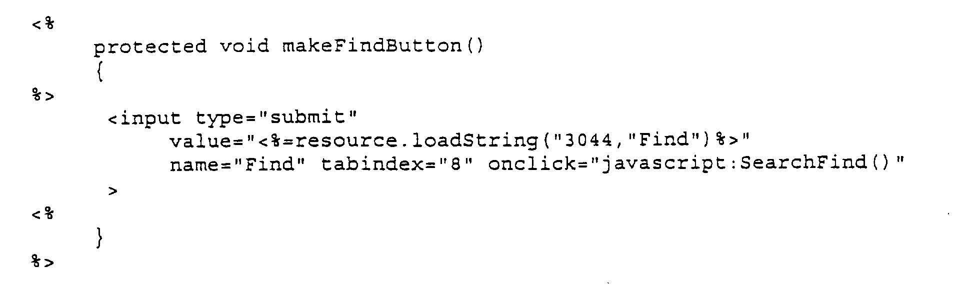

The drawback to this solution is that it is impossible to implement in JSP. The generated Java code is already contained in a method definition. It is not possible to declare a method within a method in Java.

Another possibility would be to use what are known as include files. Include files are blocks of code that are placed in separate files. These, however, are difficult to manage (with the code in multiple files) and provide only for very limited reusability, because they do not accept parameters to tailor them to specific situations. Additionally, the source gets split up into several files, making it harder to maintain a logically connected source, due to the fact that it is difficult to immediately find all the pieces.

Another possible solution to this problem would be to define a Java method using the JSP declaration syntax instead of inline syntax. The Java method is then generated as a method at the same level as the method that defines the rest of the code in the JSP page. A sample is the following:

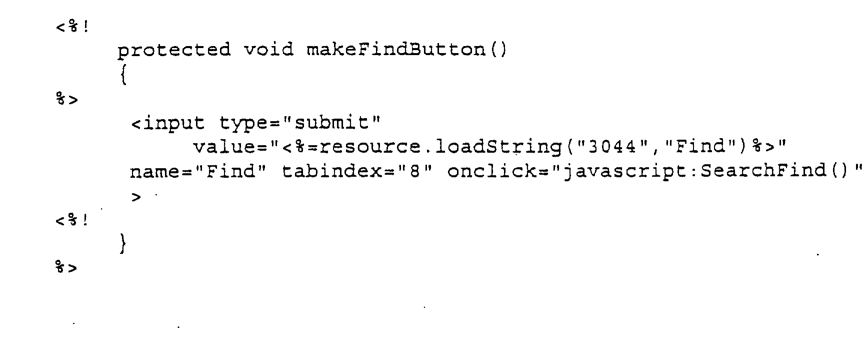

Unfortunately, this solution also doesn't work. The makeFindButton method gets separated from the HTML text. The makeFindButton method turns into a method that does not include the HTML text.

Another possible solution to this problem would be to define a java method that generates character strings for the HTML text. A sample is the following:

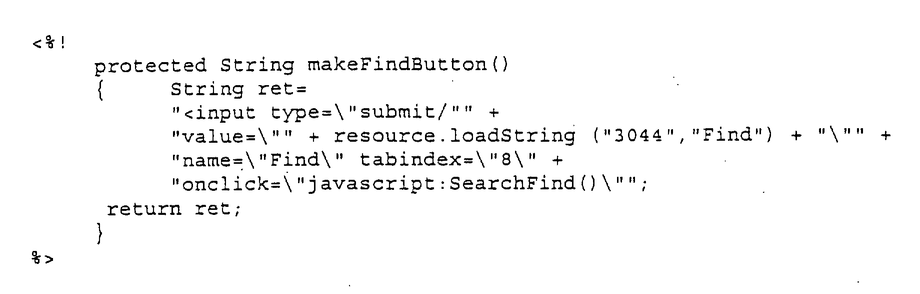

In order to use this function on a JSP page to generate HTML, the user would specify <%=makeFindButton ( ) %>. This allows modularization, but backslashes and concatenation operators (+) would cause it to be somewhat difficult to implement.

Another possible solution to this problem would be to define a Java method that generates character strings for the HTML text, but substitute a character for the quotation mark to avoid the inevitable parsing problems. A sample is the following:

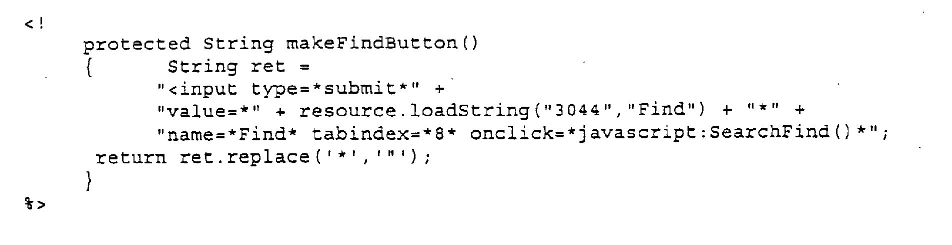

The advantage of this solution is that a programmer would not have to type backslashes in front of every quote. However, this requires that anyone trying to customize the HTML be taught how to deal with this nontraditional environment. It is also not clear what character might be useful in replacing the quotation mark. The sample above uses "*", but that is not always safe since a "*" may be present in the output string.

What is needed is a solution which provides for the creation of modular and reusable HTML fragments in JSP without creating significant programming or implementation problems.

### BRIEF DESCRIPTION OF THE INVENTION

The present invention involves using inner classes to create modular and reusable Hypertext Markup Language (HTML) fragments. A method is written for a given HTML fragment which generates the fragment. This method is then added to an inner class. The inner class is placed in a file. The class may then be instantiated. Code is then added to JavaServer Page pages to generate the HTML fragment in the appropriate place. This allows for modular and reusable HTML code fragments to be edited by users unfamiliar with detailed programming languages such as Java. It also permits flexibility for a programmer to include the reusable fragment in the same file as the rest of the JSP code or in a separate file, as well as allowing the fragment to accept parameters, enabling the HTML fragment to be tailored to particular applications.

### BRIEF DESCRIPTION OF THE DRAWINGS

The accompanying drawings, which are incorporated into and constitute a part of this specification, illustrate one or more embodiments of the present invention and, together with the detailed description, serve to explain the principles and implementations of the invention.

In the drawings:
FIG. 1 is a flow diagram illustrating a method for creating a reusable and modular HTML fragment in JSP in accordance with a specific embodiment of the present invention.
FIG. 2 is a block diagram illustrating an apparatus for creating a reusable and modular HTML fragment in JSP in accordance with a specific embodiment of the present invention.

### DETAILED DESCRIPTION

Embodiments of the present invention are described herein in the context of a system of computer, servers, communication mechanism, and tags. Those of ordinary skill in the art will realize that the following detailed description of the present invention is illustrative only and is not intended to be in any way limiting. Other embodiments of the present invention will readily suggest themselves to such skilled persons having the benefit of this disclosure. Reference will now be made in detail to implementations of the present invention as illustrated in the accompanying drawings. The same reference indicators will be used throughout the drawings and the following detailed description to refer to the same or like parts.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with the present invention, the components, process steps, and/or data structures may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

The present invention uses inner classes to create modular and reusable HTML fragments in JSP. It allows the HTML fragments to be edited by users unfamiliar with Java. Additionally, a reusable fragment may be in the same file as the rest of the JSP code, or in a separate file should the programmer so choose. Furthermore, the present invention allows the method that generates the HTML fragment to accept parameters, which permits the HTML fragment to be tailored to the particular application.

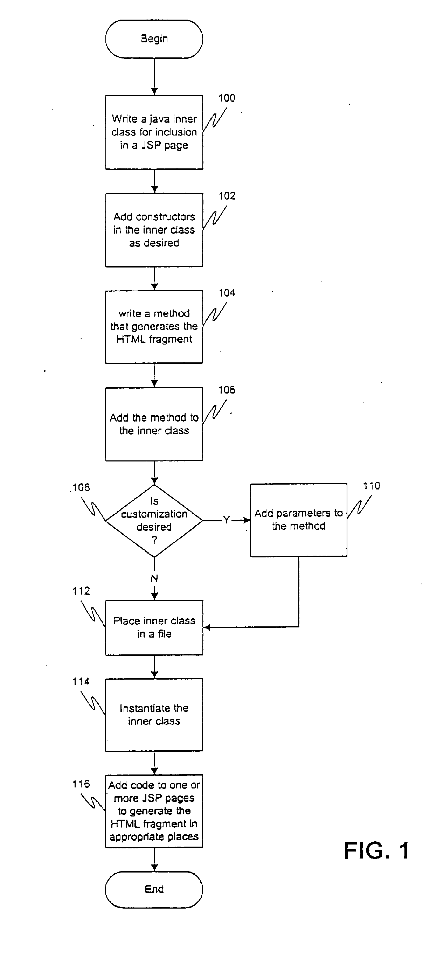

FIG. 1 is a flow diagram illustrating a method for creating a reusable and modular HTML fragment in JSP in accordance with a specific embodiment of the present invention. The method will likely be implemented by a developer writing JSP code. The developer determines which HTML fragments are to be made reusable or modular. Reusable fragments are pieces of HTML that will occur more than once in the generated HTML page. Modular fragments are pieces of HTML that form a logical grouping of statements. Once a fragment is identified to be made reusable or modular, the method may be implemented.

At 100, a Java inner class is written for inclusion in the JSP page. An example of this may be:

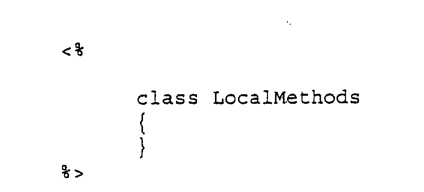

At 102, the developer determines if constructors for the inner class are desired, and adds them to the inner class as appropriate. For example, a JspWriter could be added in a constructor as follows:

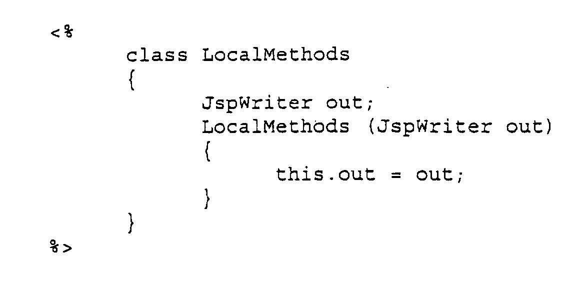

At 104, for the HTML fragment, a method that generates the fragment is written. At 106, this method is added to the inner class. HTML fragments that are to be generated verbatim may be included inline at this point. These are syntactically separated from Java code with appropriate use of %> and <% directives. An example of this is the makeFindButton that follows:

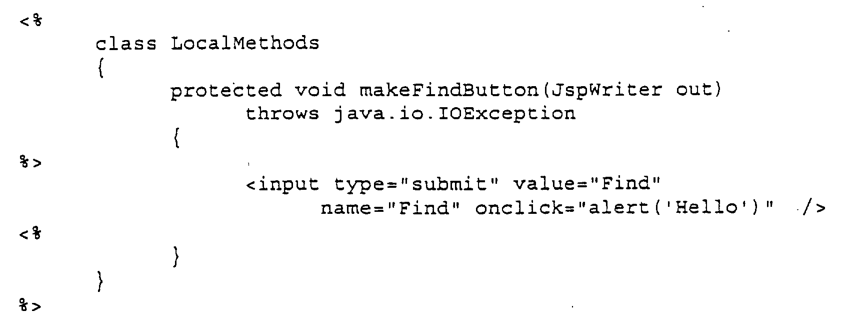

At 108, it is determined if customization of the fragment is desired. Customization of the fragment will normally be desired when the fragment should not be identical each and every time it appears. If customization is desired, at 110 parameters may be added to the method. Appropriate Java logic may be added to perform this customization. At 112, the inner class is placed in a file. If desired, it may be placed in a file separate from other JSP code, and an include directive may be used to specify its location. At 114, Java code may be added to instantiate the class. An example of this is:

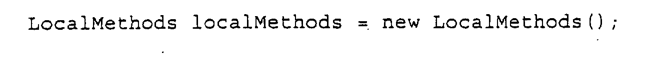

At 116, code is added to the JSP pages to generate the HTML fragments in the appropriate place. This is coded as a Java method code. For example:

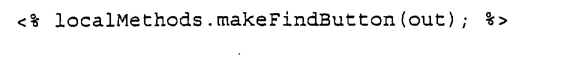

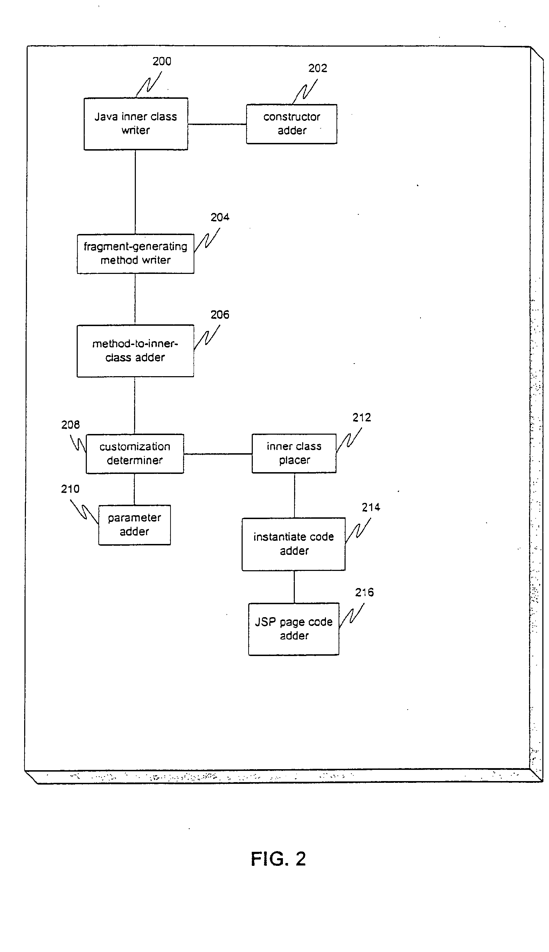

FIG. 2 is a block diagram illustrating an apparatus for creating a reusable and modular HTML fragment in JSP in accordance with a specific embodiment of the present invention. A Java inner class writer 200 writes a Java inner class for inclusion in the JSP page. An example of this may be:

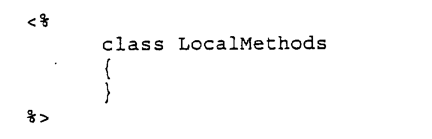

A constructor adder 202 coupled to said Java inner class writer 200 adds constructors to the inner class as appropriate. For example, a Jsp Writer could be added in a constructor as follows:

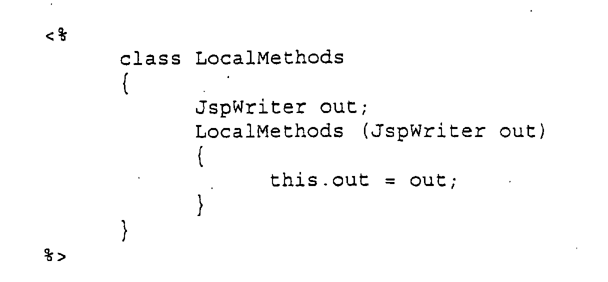

A fragment-generating method writer 204 coupled to said Java inner class writer 200 writes a method that generates the HTML fragment. A method-to-inner-class adder 206 coupled to said fragment-generating method writer 204 adds the method is to the inner class. HTML fragments that are to be generated verbatim may be included inline at this point. These are syntactically separate from Java code with appropriate use of %> and <% directives. An example of this is the makeFindButton method that follows:

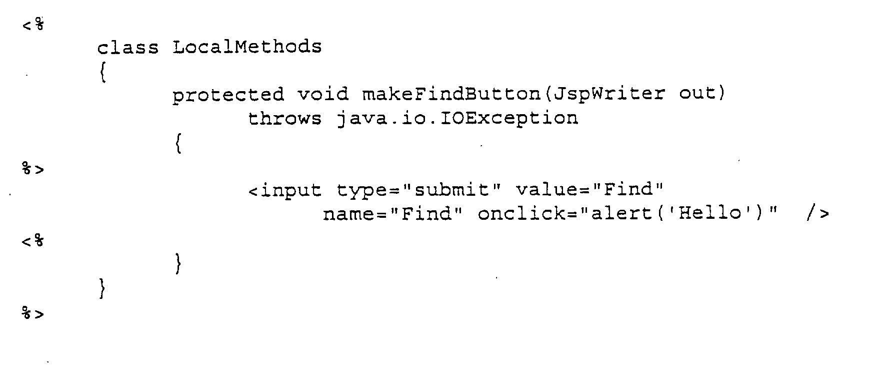

A customization determiner 208 coupled to said method-to-inner-class adder 206 determines if customization of the fragment is desired. Customization of the fragment will normally be desired when the fragment should not be identical each and every time it appears. If customization is desired, a parameter adder 210 coupled to said customization determiner 208 may add parameters to the method. Appropriate Java logic may be added to perform this customization. An inner class placer 212 coupled to said customization determiner 208 places the inner class in a file. If desired, it may be placed in a file separate from other JSP code, and an include directive may be used to specify its location. An instantiate code adder 214 coupled to said inner class placer 212 adds Java code to instantiate the class. An example of this is:

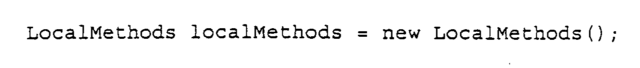

A JSP page code adder 216 coupled to said instantiate code adder 214 adds code to the JSP pages to generate the HTML fragments in the appropriate place. This is coded as a Java method call. For example:

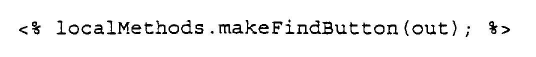

Companies utilizing the method or apparatus of the present invention could be detected by finding programs that have .jsp code that contains inner classes. However, in most cases the .jsp code is not available to users. Even with the .jsp code not available, it is still possible to detect usage. At some step in the process, the .jsp is converted to .Java code. The .java code is then compiled into .class files. The .class files are then packaged into a .jar file, which is then distributed.

Software exists that can look in a .jar file and list the packaged files. This yields the names of the component .class files. Most Java compilers split inner classes into separate .class files and use a naming convention to identify them, such as using "$'' symbols. For example:

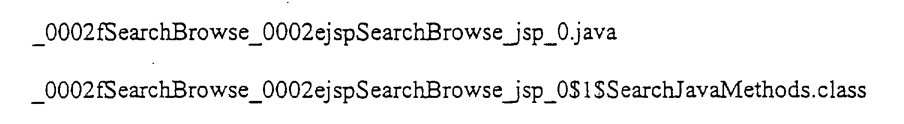

SearchJavaMethods is an inner class inside of SearchBrowse.jsp. Therefore, if one looks for filenames with "$" symbols in them, it is quite likely that the corresponding files are class files generated from an inner class. This may then be used as a starting point for further investigations to determine if inner classes are used to embed HTML fragments.

Examples are provided herein which illustrate possible implementations for the present invention. Nothing in these examples should be read as any way limiting to the type or structures of possible embodiments.

### Basic Example

This example illustrates the following things:
- Inner class defined in the main .jsp page.
- Passing the JspWriter in the method call.

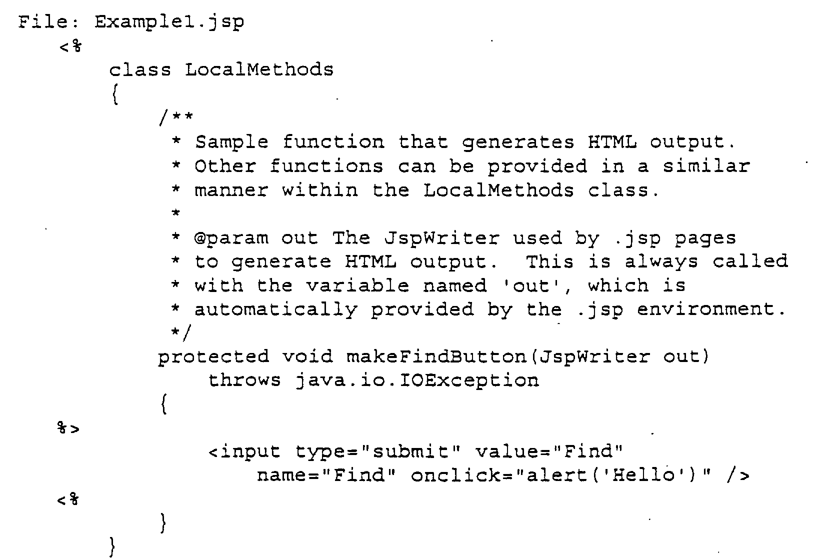

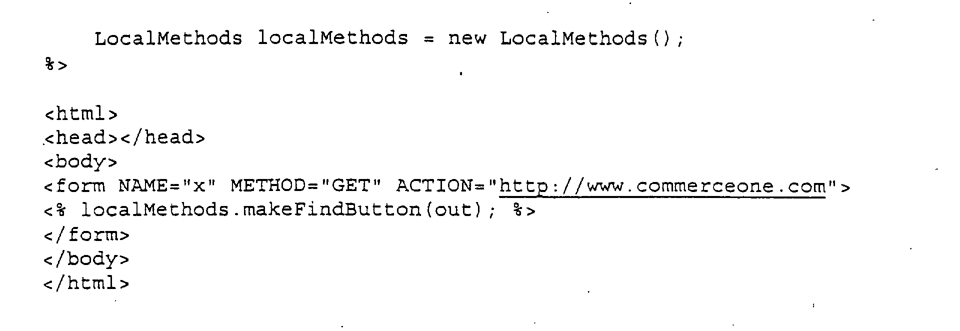

### Passing Jsp Writer to Constructor

This example illustrates the following things:
- Inner class defined in the main .jsp page.
- Passing the JspWriter in the constructor. This technique could be used to instantiate the inner class with other Objects that are needed by the methods in the inner class.

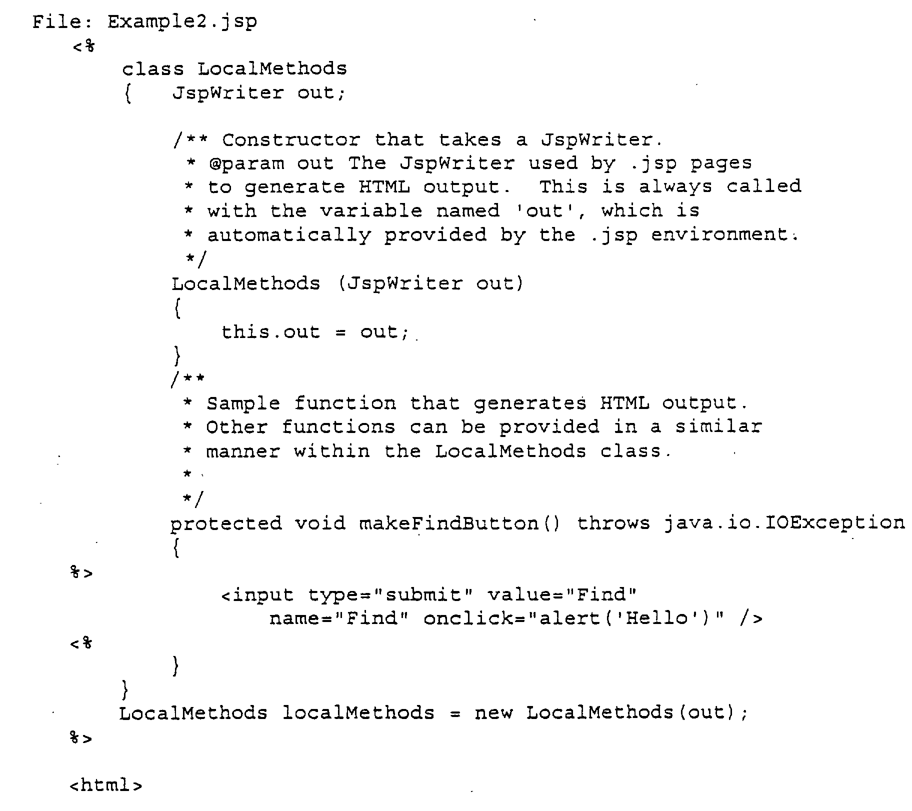

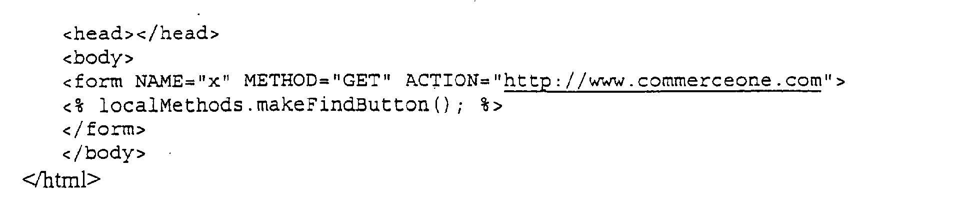

### Passing a parameter to inner class method

This example illustrates the following things:
- Inner class defined in the main .jsp page.
- Passing the JspWriter in the constructor. This technique could be used to instantiate the inner class with other Objects that are needed by the methods in the inner class.
- Customizing the HTML output by adding parameters to the inner class method invocation.

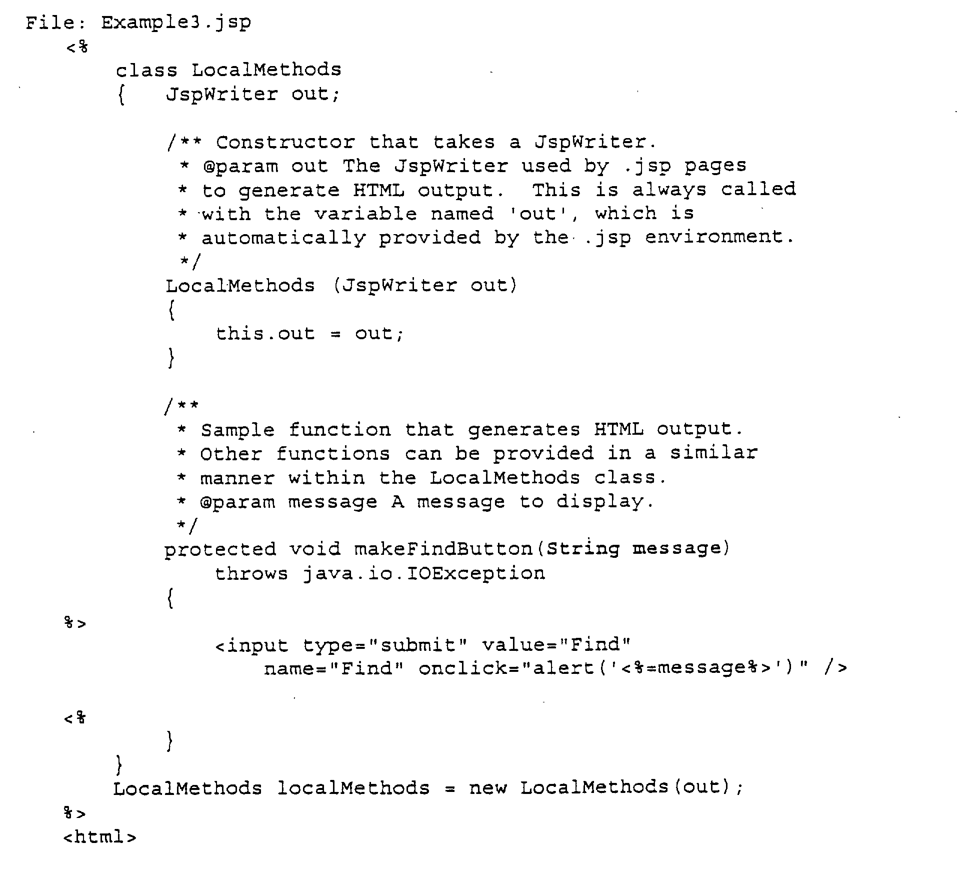

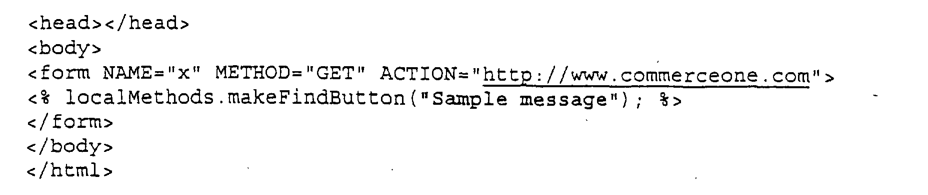

### Placing inner class in included file

This example illustrates the following things:
- Defining the inner class in an included file, and instantiating the class in the included file.
- Passing the JspWriter in the constructor. This technique could be used to instantiate the inner class with other Objects that are needed by the methods in the inner class.

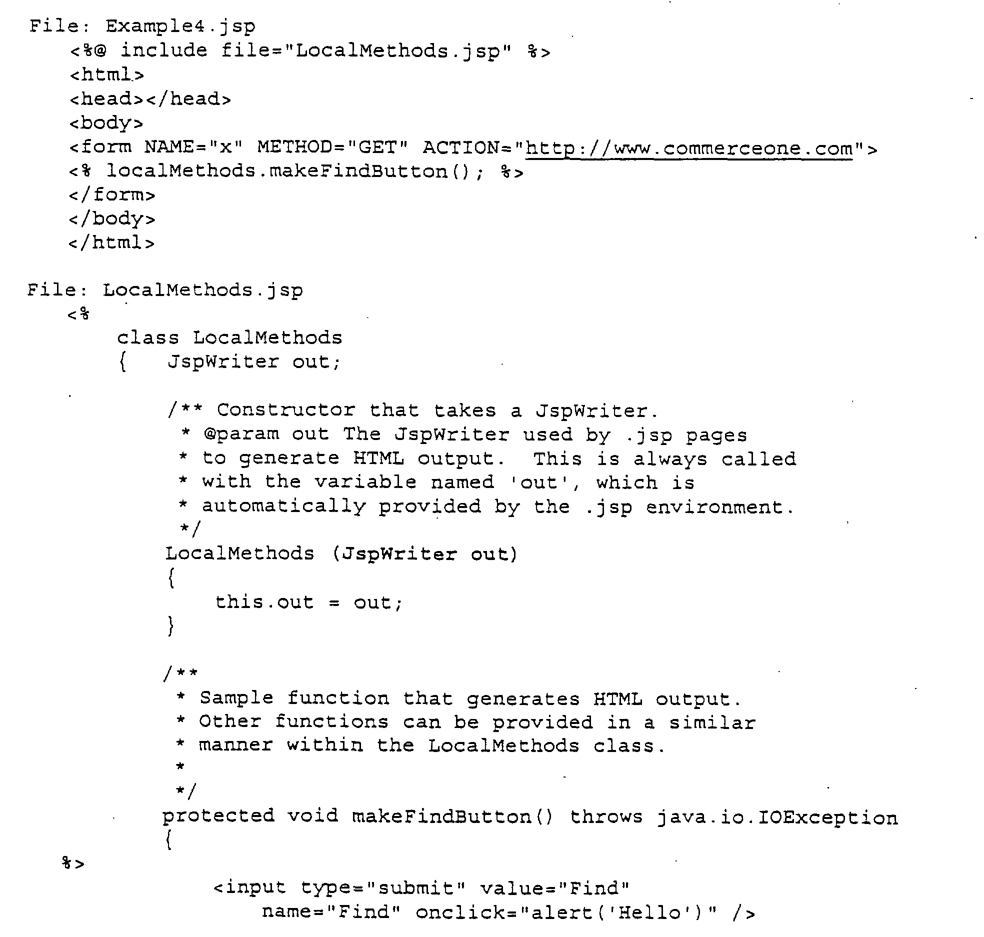

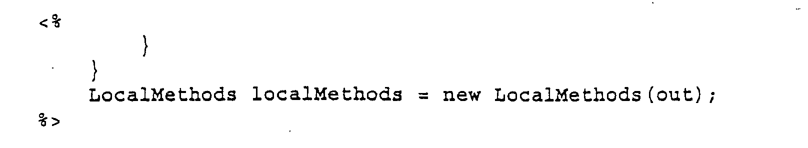

### Placing inner class in included file, instantiating class in main file

This example illustrates the following things:
- Defining the inner class in an included file, and instantiating the class in the main file.
- Passing the JspWriter in the constructor. This technique could be used to instantiate the inner class with other Objects that are needed by the methods in the inner class. 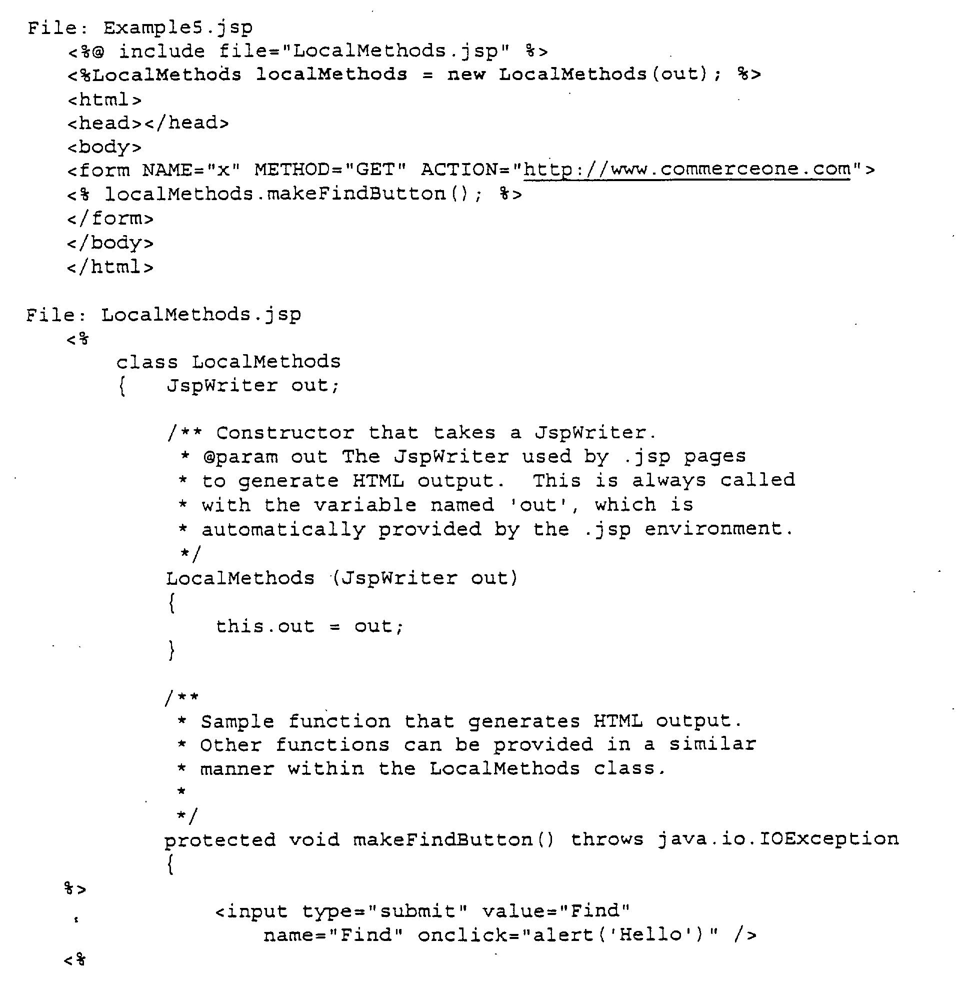 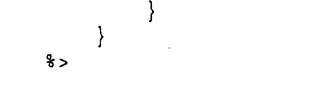
   While embodiments and applications of this invention have been shown and described, it would be apparent to those skilled in the art having the benefit of this disclosure that many more modifications than mentioned above are possible without departing from the inventive concepts herein. The invention, therefore, is not to be restricted except in the spirit of the appended claims.

## Claims

1. A method for creating a reusable and modular hypertext fragment in JavaServer Pages comprising:
writing a Java inner class for inclusion on a JavaServer Page (JSP);
creating a method that generates the hypertext fragment;
inserting said created method into said inner class;
placing said inner class in a file;
instantiating said inner class; and
adding code to one or more JSPs to generate the hypertext fragment in appropriate places.

2. The method of claim 1, further including:
adding constructors to said inner class if desired.

3. The method of claim 1, further including:
adding parameters to said created method if customization is desired.

4. The method of claim 1, wherein said creating further includes separating said hypertext fragments from Java code using directives.

5. The method of claim 3, wherein customization is desired when said hypertext fragment should not be identical each and every time it appears.

6. The method of claim 1, wherein said file is a file separate from other JSP code and the method further includes placing an include directive in said JSP code to specify said file's location.

7. A method for creating a reusable and modular hypertext fragment in an Internet Server-side Java-based scripting environment for building web applications, the method comprising:
writing an Java inner class for inclusion on an Internet Server-side Java-based scripting environment page;
creating a method that generates the hypertext fragment;
inserting said created method into said inner class;
placing said inner class in a file;
instantiating said inner class; and
adding code to one or more Internet Server-side Java-based scripting environment pages to generate the hypertext fragment in appropriate places.

8. The method of claim 7, wherein said Internet Server-side Java-based scripting environment for building web applications is JavaServer Pages.

9. The method of claim 7, further including:
adding constructors to said inner class if desired.

10. The method of claim 7, further including:
adding parameters to said created method if customization is desired.

11. The method of claim 7, wherein said creating further includes separating said hypertext fragments from Java code using directives.

12. The method of claim 9, wherein customization is desired when said hypertext fragment should not be identical each and every time it appears.

13. The method of claim 7, wherein said file is a file separate from other Internet Server-side Java-based scripting environment code and the method further includes placing an include directive in said Internet Server-side Java-based scripting environment code to specify said file's location.

14. An apparatus for creating a reusable and modular hypertext fragment in JavaServer Pages comprising:
a Java inner class writer;
a fragment generating method writer coupled to said Java inner class writer;
a method-to-inner-class adder coupled to said fragment generating method writer;
a customization determiner coupled to said method-to-inner-class adder;
an inner class placer coupled to said customization determiner;
an instantiate code adder coupled to said inner class placer; and
a JavaServer Pages page code adder coupled to said instantiate code adder.

15. The apparatus of claim 14, further including:
a constructor adder coupled to said Java inner class writer.

16. The apparatus of claim 14, further including:
a parameter adder coupled to said customization determiner.

17. An apparatus for creating a reusable and modular hypertext fragment in JavaServer Pages comprising:
means for writing a Java inner class for inclusion on a JavaServer Page (JSP);
means for creating a method that generates the hypertext fragment;
means for inserting said created method into said inner class;
means for placing said inner class in a file;
means for instantiating said inner class; and
means for adding code to one or more JSPs to generate the hypertext fragment in appropriate places.

18. The apparatus of claim 17, further including:
means for adding constructors to said inner class if desired.

19. The apparatus of claim 17, further including:
means for adding parameters to said created method if customization is desired.

20. The apparatus of claim 17, wherein said means for creating further includes means for separating said hypertext fragments from Java code using directives.

21. The apparatus of claim 19, wherein customization is desired when said hypertext fragment should not be identical each and every time it appears.

22. The apparatus of claim 17, wherein said file is a file separate from other JSP code and the apparatus further includes means for placing an include directive in said JSP code to specify said file's location.

23. An apparatus for creating a reusable and modular hypertext fragment in an Internet Server-side Java-based scripting environment for building web applications, the apparatus comprising:
means for writing an Java inner class for inclusion on an Internet Server-side Java-based scripting environment page;
means for creating a method that generates the hypertext fragment;
means for inserting said created method into said inner class;
means for placing said inner class in a file;
means for instantiating said inner class; and
means for adding code to one or more Internet Server-side Java-based scripting environment pages to generate the hypertext fragment in appropriate places.

24. The apparatus of claim 23, wherein said Internet Server-side Java-based scripting environment for building web applications is JavaServer Pages.

25. The apparatus of claim 23, further including:
means for adding constructors to said inner class if desired.

26. The apparatus of claim 23, further including:
means for adding parameters to said created method if customization is desired.

27. The apparatus of claim 23, wherein said means for creating further includes means for separating said hypertext fragments from Java code using directives.

28. The apparatus of claim 26, wherein customization is desired when said hypertext fragment should not be identical each and every time it appears.

29. The apparatus of claim 26, wherein said file is a file separate from other Internet Server-side Java-based scripting environment code and the apparatus further includes means for placing an include directive in said internet Server-side Java-based scripting environment code to specify said file's location.

30. A program storage device readable by a machine, tangibly embodying a program of instructions executable by the machine to perform a method for creating a reusable and modular hypertext fragment in JavaServer Pages, the method comprising:
writing a Java inner class for inclusion on a JavaServer Page (JSP);
creating a method that generates the hypertext fragment;
inserting said created method into said inner class;
placing said inner class in a file;
instantiating said inner class; and
adding code to one or more JSPs to generate the hypertext fragment in appropriate places.

31. A program storage device readable by a machine, tangibly embodying a program of instructions executable by the machine to perform a method for creating a reusable and modular hypertext fragment in an Internet Server-side Java-based scripting environment for building web applications, the method comprising:
writing an Java inner class for inclusion on an Internet Server-side Java-based scripting environment page;
creating a method that generates the hypertext fragment;
inserting said created method into said inner class;
placing said inner class in a file;
instantiating said inner class; and
adding code to one or more Internet Server-side Java-based scripting environment pages to generate the hypertext fragment in appropriate places.
